# FASCICULE DE BREVET EUROPEEN

(11) **EP 4 071 053 B1**
(45) Date de publication et mention de la délivrance du brevet: **10.07.2024**
(21) Numéro de dépôt: 22166251.3
(22) Date de dépôt: 01.04.2022
(51) Int. Cl.: B64C 25/16, B64C 1/10

(54) **CASE DE TRAIN D'ATTERRISSAGE COMPRENANT UNE PAROI DE FOND PRÉSENTANT UNE FORME VOÛTÉE, AÉRONEF COMPORTANT LADITE CASE DE TRAIN D'ATTERRISSAGE**
FAHRWERKSKASTEN MIT EINER BODENWAND, DIE EINE GEWÖLBTE FORM AUFWEIST, LUFTFAHRZEUG MIT DIESEM FAHRWERKSKASTEN
LANDING GEAR BOX COMPRISING A BOTTOM WALL HAVING A VAULTED SHAPE, AIRCRAFT COMPRISING SAID LANDING GEAR BOX

(30) Priorité: 06.04.2021 FR 2103476
(43) Date de publication de la demande: 12.10.2022
(73) Titulaire: Airbus Operations SAS, 31060 Toulouse (FR)
(72) Inventeur: ORTEU, Benoit, 31060 TOULOUSE (FR); SIRE, Damien, 31060 TOULOUSE (FR)
(74) Mandataire: Fantin, Laurent

(56) Documents cités:
- EP-A2- 2 824 031
- US-A1- 2009 078 822
- US-A1- 2019 112 034
- US-A1- 2019 112 035

## Description

La présente demande se rapporte à une case de train d'atterrissage comprenant une paroi de fond présentant une forme voûtée ainsi qu'à un aéronef comportant ladite case de train d'atterrissage.

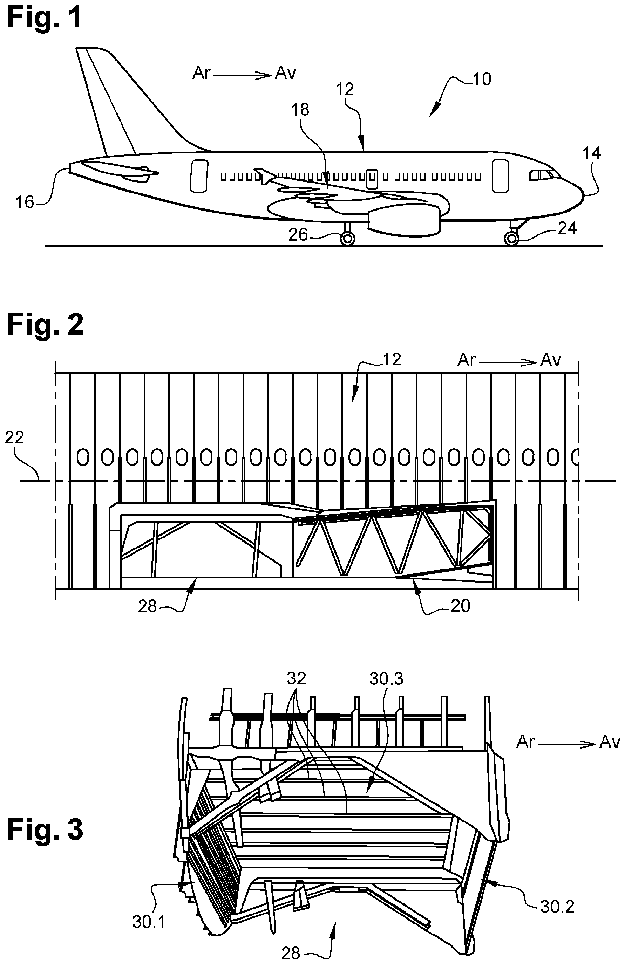

Comme illustré sur les figures 1 et 2, un aéronef 10 comprend un fuselage 12 qui s'étend entre une pointe avant 14 et une pointe arrière 16, ainsi que des ailes 18 disposées de part et d'autre du fuselage 12 et reliées à ce dernier par un caisson central de voilure 20.

Pour la suite de la description, un axe longitudinal 22 de l'aéronef 10 correspond à l'axe horizontal, lorsque l'aéronef 10 est au sol, qui s'étend de la pointe avant 14 à la pointe arrière 16 de l'aéronef 10. Une direction longitudinale est une direction parallèle à l'axe longitudinal 22. Un plan longitudinal est un plan qui est parallèle à l'axe longitudinal 22. Un plan médian vertical est un plan vertical passant par l'axe longitudinal 22. Un plan transversal est un plan perpendiculaire à l'axe longitudinal 22.

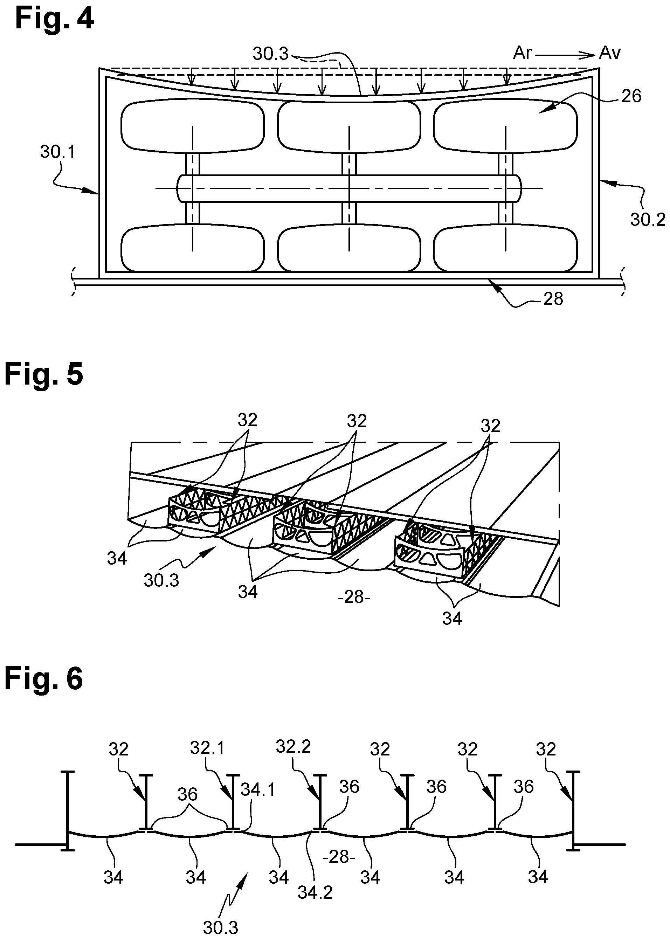

L'aéronef 10 comprend un train d'atterrissage avant 24 positionné à proximité de la pointe avant 14 ainsi que deux trains d'atterrissage principaux 26 positionnés de part et d'autre du fuselage 12, à l'arrière du caisson central de voilure 20. Chaque train d'atterrissage avant ou principal 24, 26 est configuré pour occuper une position déployée, comme illustré sur la figure 1, dans laquelle il est positionné en dehors d'une case de train, ainsi qu'une position rétractée dans laquelle il est positionné dans la case de train, comme illustré sur la figure 4.

Comme illustré sur les figures 2 à 4, le fuselage 12 comprend une case de train d'atterrissage principale 28 positionnée à l'arrière du caisson central de voilure 20 et configurée pour recevoir les deux trains d'atterrissage principaux 26 dans la position rétractée. Cette case de train d'atterrissage principale 28 comprend une paroi transversale arrière 30.1, une paroi transversale avant 30.2 ainsi qu'une paroi de fond 30.3. Certaines de ces parois, notamment la paroi transversale arrière 30.1 et la paroi de fond 30.3, forment une barrière étanche entre une première zone pressurisée, à l'intérieur du fuselage 12 et à l'extérieur de la case de train d'atterrissage principale 28, et une deuxième zone non pressurisée à l'intérieur de la case de train d'atterrissage principale 28. En raison de cette différence de pression, la paroi de fond 30.3 tend à s'incurver vers l'intérieur de la case de train d'atterrissage principale 28, comme illustré sur la figure 4. Pour limiter cette déformation, la paroi de fond 30.3 est renforcée et comprend plusieurs poutres longitudinales 32 parallèles entre elles, orientées parallèlement à la direction longitudinale et qui s'étendent de la paroi transversale arrière 30.1 jusqu'à la paroi transversale avant 30.2.

Selon un mode de réalisation visible sur les figures 5 et 6, la paroi de fond 30.3 comprend également plusieurs membranes 34 approximativement rectangulaires reliant les poutres longitudinales 32. Chaque membrane 34 est incurvée vers l'intérieur de la case de train d'atterrissage principale 28 et comprend un premier bord longitudinal 34.1 relié à une première poutre longitudinale 32.1 ainsi qu'un deuxième bord longitudinal 34.2 relié à une deuxième poutre longitudinale 32.2. En complément, chaque poutre longitudinale 32, 32.1, 32.2 comprend une semelle 36 contre laquelle sont plaqués le premier bord longitudinal 34.1 d'une première membrane 34 et le deuxième bord longitudinal 34.2 d'une deuxième membrane 34. Selon ce mode de réalisation, les semelles 36 sont coplanaires.

Selon ce mode de réalisation, la pression exercée sur la paroi de fond 30.3 en raison de la différence de pression entre les première et deuxième zones est soutenue par des poutres longitudinales 32 qui reprennent la totalité de la charge. De ce fait, les poutres longitudinales 32 fléchissent verticalement. Pour limiter cette flexion, il est nécessaire de renforcer les poutres longitudinales 32 ou d'en prévoir un plus grand nombre ce qui tend à augmenter la masse embarquée.

Le document EP2824031 décrit, à la figure 10, une case de train d'atterrissage. Cette dernière comprend une paroi de fond et une paroi verticale comportant des poutres longitudinales ou verticales ainsi que des panneaux reliés aux poutres longitudinales. Chaque panneau comprend des empreintes en creux discontinues (qui ne s'étendent pas d'un bord à l'autre du panneau) pour augmenter sa raideur. Compte tenu des différences de contraintes d'une zone à l'autre d'un panneau, l'agencement des empreintes en creux varie d'une zone à l'autre. Comme précédemment, la pression exercée sur la paroi de fond en raison de la différence de pression de part et d'autre de la paroi de fond est soutenue par des poutres longitudinales qui reprennent la totalité de la charge. De ce fait, les poutres longitudinales fléchissent verticalement.

La présente invention vise à remédier à tout ou partie des inconvénients de l'art antérieur.

A cet effet, l'invention a pour objet une case de train d'atterrissage comprenant une paroi de fond présentant un bord arrière, un bord avant parallèle au bord arrière et perpendiculaire à un plan médian vertical ainsi que des premier et deuxième bords latéraux parallèles au plan médian vertical, la paroi de fond comportant des poutres longitudinales reliant les bords arrière et avant, parallèles au plan médian vertical, ainsi qu'au moins un panneau formant une barrière étanche entre des première et deuxième zones disposées de part et d'autre du panneau, ledit panneau présentant des premier et deuxième bords longitudinaux reliés chacun à une des poutres longitudinales, la deuxième zone présentant une pression supérieure à celle de la première zone, où le panneau présente un profil sensiblement constant selon la direction longitudinale et comprend, au moins en l'absence d'une différence de pression entre les première et deuxième zones, au moins une partie centrale décalée vers la deuxième zone par rapport à ses premier et deuxième bords longitudinaux de sorte que des efforts appliqués sur le panneau, en raison d'une différence de pression entre les première et deuxième zones, induisent des contraintes sur les poutres longitudinales comprenant une composante horizontale au niveau des premier et deuxième bords longitudinaux.

Ainsi, les efforts appliqués sur le panneau, en raison de la différence de pression entre les première et deuxième zones, induisent des contraintes sur les poutres longitudinales comprenant une composante horizontale et non uniquement une composante verticale comme pour l'art antérieur, ce qui contribue à réduire les contraintes verticales appliquées sur les poutres longitudinales.

Selon une autre caractéristique, les premier et deuxième bords longitudinaux sont positionnés dans un même plan horizontal.

Selon une première variante, le panneau présente un profil courbe dans un plan transversal. Selon une deuxième variante, le panneau comprend une partie centrale plane sensiblement horizontale ainsi que des première et deuxième parties latérales planes et inclinées de sorte que la partie centrale soit décalée vers la deuxième zone par rapport aux premier et deuxième bords longitudinaux.

Selon une autre caractéristique, au moins une poutre longitudinale comprend une âme, des première et deuxième ailes, disposées de part et d'autre de l'âme, supportant chacune un panneau, les première et deuxième ailes étant concourantes au niveau de l'âme.

Selon un agencement, la paroi de fond comprend une première poutre longitudinale d'extrémité positionnée à proximité ou au niveau du premier bord latéral, une deuxième poutre longitudinale d'extrémité positionnée à proximité ou au niveau du deuxième bord latéral, des première et deuxième poutres longitudinales centrales disposées de part et d'autre du plan médian vertical, un premier couple de première et deuxième poutres longitudinales intermédiaires intercalées entre les premières poutres longitudinales d'extrémité et centrale ainsi qu'un deuxième couple de première et deuxième poutres longitudinales intermédiaires intercalées entre les deuxièmes poutres longitudinales d'extrémité et centrale.

En complément, la paroi de fond comprend un panneau central reliant les première et deuxième poutres longitudinales centrales, un premier panneau latéral reliant la première poutre longitudinale d'extrémité et la première poutre longitudinale centrale ainsi qu'un deuxième panneau latéral reliant la deuxième poutre longitudinale centrale et la deuxième poutre longitudinale d'extrémité, chacun des premier et deuxième panneaux latéraux présentant une partie centrale décalée vers la deuxième zone par rapport à ses premier et deuxième bords longitudinaux, positionnés dans un même plan horizontal.

Selon une autre caractéristique, une des première et deuxième ailes de la première ou deuxième poutre longitudinale d'extrémité est inclinée et présente une extrémité libre décalée vers la deuxième zone ainsi qu'une face orientée vers la deuxième zone contre laquelle est plaqué et fixé le premier ou deuxième bord longitudinal du premier ou deuxième panneau latéral.

Selon une autre caractéristique, la première aile de la première ou deuxième poutre longitudinale centrale est inclinée et présente une extrémité libre décalée vers la deuxième zone ainsi qu'une face orientée vers la première zone contre laquelle est plaqué et fixé le premier ou deuxième bord longitudinal du premier ou deuxième panneau latéral. En complément, la deuxième aile de la première ou deuxième poutre longitudinale centrale est sensiblement horizontale et présente une face orientée vers la première zone contre laquelle est plaqué et fixé le premier ou deuxième bord longitudinal du panneau central.

Selon une autre caractéristique, les première et deuxième ailes de chacune des premières et deuxième poutres longitudinales intermédiaires sont inclinées, le premier ou deuxième panneau latéral étant plaqué et fixé contre les première et deuxième ailes.

Selon une autre caractéristique, au moins un panneau comprend des nervures transversales rapportées sur une face du panneau orientée vers la première zone.

L'invention a également pour objectif un aéronef comprenant une case de train d'atterrissage selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'une partie du fuselage de l'aéronef visible sur la figure 1,
- La figure 3 est une vue en perspective d'une case de train d'atterrissage principale vide illustrant un mode de réalisation de l'art antérieur,
- La figure 4 est une coupe longitudinale de la case de train d'atterrissage principale, visible sur la figure 3, montrant une déformation d'une paroi de fond,
- La figure 5 est une coupe transversale de la case de train d'atterrissage principale visible sur la figure 3,
- La figure 6 est une coupe transversale schématique de la paroi de fond d'une case de train d'atterrissage principale illustrant un mode de réalisation de l'art antérieur,
- La figure 7 est une vue en perspective d'une case de train d'atterrissage principale illustrant un mode de réalisation de l'invention,
- La figure 8 est une vue en perspective d'une paroi de fond de la case de train d'atterrissage principale visible sur la figure 7,
- La figure 9 est une coupe longitudinale de la case de train d'atterrissage principale visible sur la figure 7,
- La figure 10 est une coupe transversale de la case de train d'atterrissage principale visible sur la figure 7,
- La figure 11 est une superposition d'une coupe transversale d'une paroi de fond d'une case de train d'atterrissage principale illustrant le mode de réalisation de l'invention visible sur la figure 7 et d'une coupe transversale d'une paroi de fond d'une case de train d'atterrissage principale illustrant un mode de réalisation de l'art antérieur,
- La figure 12 est une coupe transversale d'une paroi de fond d'une case de train d'atterrissage principale illustrant un autre mode de réalisation de l'invention,
- La figure 13 est une coupe d'une première partie d'une paroi de fond d'une case de train d'atterrissage principale illustrant un mode de réalisation de l'invention,
- La figure 14 est une coupe d'une deuxième partie d'une paroi de fond d'une case de train d'atterrissage principale illustrant un mode de réalisation de l'invention, et
- La figure 15 est une coupe d'une troisième partie d'une paroi de fond d'une case de train d'atterrissage principale illustrant un mode de réalisation de l'invention.

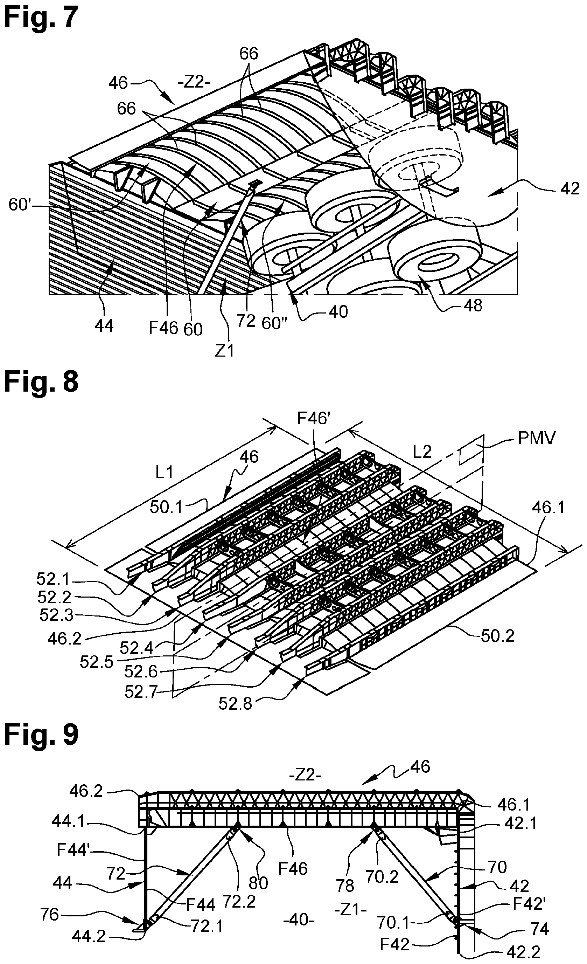

Selon un mode de réalisation visible sur les figures 7 à 9, une case de train d'atterrissage principale 40 comprend une paroi transversale arrière 42 perpendiculaire à un plan médian vertical PMV, une paroi transversale avant 44 approximativement parallèle à la paroi transversale arrière 42 ainsi qu'une paroi de fond 46 approximativement perpendiculaire aux parois transversales arrière et avant 42, 44 ainsi qu'au plan médian vertical PMV. La paroi de fond 46 est positionnée de manière symétrique par rapport au plan médian vertical PMV. La paroi transversale avant 44 peut faire partie d'un caisson central de voilure.

La case de train d'atterrissage principale 40 délimite une première zone Z1 configurée pour loger deux trains d'atterrissage principaux 48 (un seul visible sur la figure 7) lorsqu'ils sont en position rétractée, positionnés de part et d'autre du plan médian vertical PMV, comme illustré sur la figure 7. La paroi de fond 46, et éventuellement au moins l'une des parois transversales arrière et avant 42, 44, sépare(nt) la première zone Z1, non pressurisée, d'une deuxième zone Z2, pressurisée, située à l'intérieur du fuselage et à l'extérieur de la case de train d'atterrissage principale 40. Ainsi, en vol, la deuxième zone Z2 présente une pression supérieure à celle de la première zone Z1. Selon une configuration, la paroi de fond 46 et la paroi transversale arrière 42 séparent la première zone Z1 non pressurisée de la deuxième zone Z2 pressurisée et forment une barrière étanche.

La paroi transversale arrière 42 comprend un côté supérieur 42.1 relié à la paroi de fond 46 et un côté inférieur 42.2 distant de la paroi de fond 46. La paroi transversale avant 44 comprend un côté supérieur 44.1 relié à la paroi de fond 46 et un côté inférieur 44.2 distant de la paroi de fond 46. La paroi de fond 46 comprend un bord arrière 46.1 relié au côté supérieur 42.1 de la paroi transversale arrière 42 et un bord avant 46.2 relié au côté supérieur 44.1 de la paroi transversale avant 44. La paroi de fond 46 comprend également des premier et deuxième bords latéraux 50.1, 50.2 parallèles au plan médian vertical PMV. La paroi de fond 46 présente une longueur L1 séparant les bords arrière et avant 46.1, 46.2, dimension prise selon une direction parallèle à la direction longitudinale, ainsi qu'une largeur L2 séparant les premier et deuxième bords latéraux 50.1, 50.2, dimension prise selon une direction perpendiculaire à la direction longitudinale.

La paroi transversale arrière 42 comprend une face intérieure F42 orientée vers la première zone Z1 de la case de train d'atterrissage principale 40 et une face extérieure F42' opposée à la face intérieure F42. La paroi transversale avant 44 comprend une face intérieure F44 orientée vers la première zone Z1 de la case de train d'atterrissage principale 40 et une face extérieure F44' opposée à la face intérieure F44. La paroi de fond 46 comprend une face intérieure F46 orientée vers la première zone Z1 de la case de train d'atterrissage principale 40.

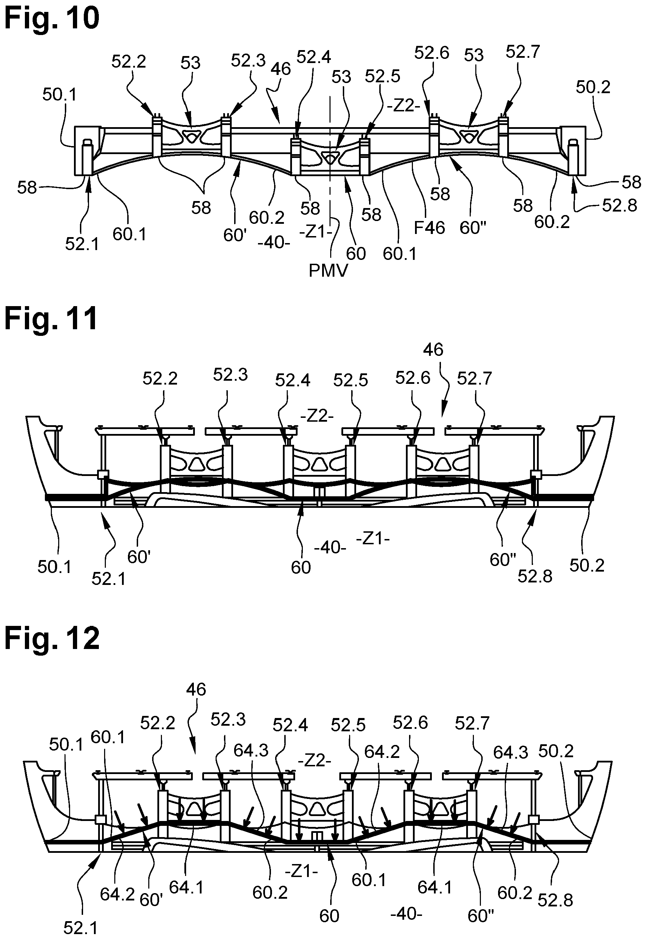

Selon une configuration visible sur les figures 8 à 10, la paroi de fond 46 est renforcée et comprend des poutres longitudinales 52.1 à 52.8 reliant les bords arrière et avant 46.1, 46.2, parallèles au plan médian vertical PMV, positionnées de manière symétrique par rapport au plan médian vertical PMV. Ces poutres longitudinales 52.1, 52.8 sont réparties sur la largeur de la paroi de fond 46 (dimension prise selon la direction transversale). Selon une configuration, la paroi de fond 46 comprend huit poutres longitudinales 52.1 à 52.8. Selon un agencement visible sur les figures 8 et 10, la paroi de fond 46 comprend une première poutre longitudinale d'extrémité 52.1 positionnée à proximité ou au niveau du premier bord latéral 50.1, une deuxième poutre longitudinale d'extrémité 52.8 positionnée à proximité ou au niveau du deuxième bord latéral 50.2, des première et deuxième poutres longitudinales centrales 52.4, 52.5 disposées de part et d'autre du plan médian vertical PMV, un premier couple de première et deuxième poutres longitudinales intermédiaires 52.2, 52.3 intercalées entre les premières poutres longitudinales d'extrémité et centrale 52.1, 52.4 ainsi qu'un deuxième couple de première et deuxième poutres longitudinales intermédiaires 52.6, 52.7 intercalées entre les deuxièmes poutres longitudinales d'extrémité et centrale 52.5, 52.8. Selon un mode de réalisation, les poutres longitudinales centrales 52.4, 52.5 sont reliées par des renforts transversaux 53. De la même manière, les première et deuxième poutres intermédiaires 52.2, 52.3, 52.6, 52.7 de chacun des premier et deuxième couples sont reliées deux à deux par des renforts transversaux 53.

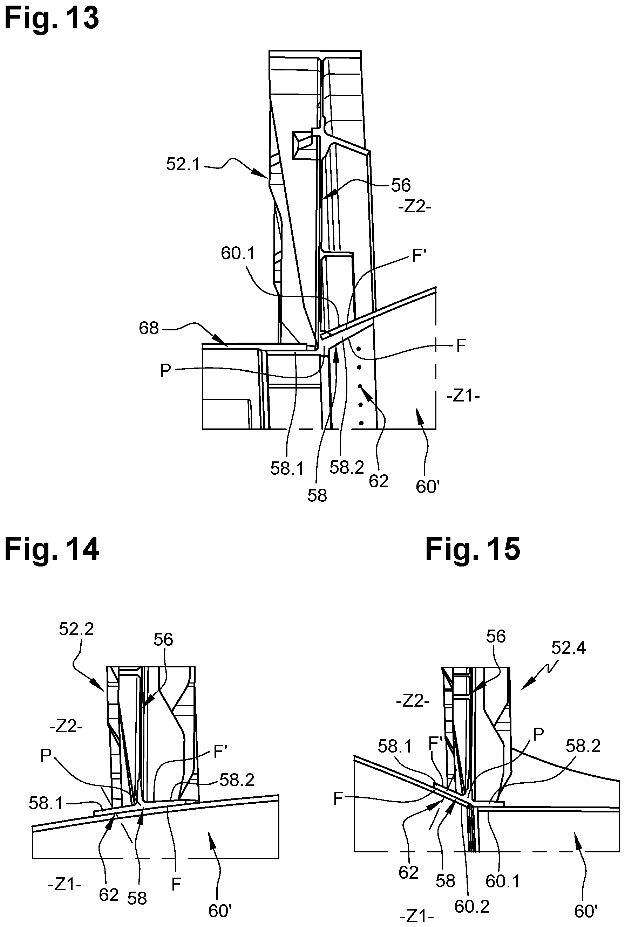

Comme illustré sur les figures 13 à 15, chaque poutre longitudinale 52.1 à 52.8 comprend une âme 56 positionnée dans un plan parallèle au plan médian vertical PMV ainsi qu'au moins une semelle 58 positionnée à l'une des extrémités de l'âme 56 orientée vers la première zone Z1 de la case de train d'atterrissage principale 40.

Chaque semelle 58 présente une première aile 58.1 disposée d'un premier côté de l'âme 56 ainsi qu'une deuxième aile 58.2 disposée d'un deuxième côté de l'âme 56. Chacune des première et deuxième ailes 58.1, 58.2 comprend une face inférieure F orientée vers la première zone Z1 et une face supérieure F' orientée vers la deuxième zone Z2.

La paroi de fond 46 comprend au moins un panneau 60 qui s'étend du bord arrière 46.1 jusqu'au bord avant 46.2. Un panneau 60 forme une barrière étanche entre les première et deuxième zones Z1, Z2, métallique ou en matériau composite, qui présente une faible épaisseur. Chaque panneau 60 est relié à au moins deux des poutres longitudinales 52.1 à 52.8.

Chaque panneau 60 comprend des premier et deuxième bords longitudinaux 60.1, 60.2 parallèles à la direction longitudinale.

Selon une première configuration visible sur les figures 7, 10 et 11, la paroi de fond 46 comprend un panneau central 60 reliant les première et deuxième poutres longitudinales centrales 52.4, 52.5, un premier panneau latéral 60' reliant la première poutre longitudinale d'extrémité 52.1 et la première poutre longitudinale centrale 52.4 ainsi qu'un deuxième panneau 60" reliant la deuxième poutre longitudinale centrale 52.5 et la deuxième poutre longitudinale d'extrémité 52.8. Chacun des panneaux central et latéraux 60, 60, 60' s'étend du bord arrière 46.1 jusqu'au bord avant 46.2.

Selon une autre configuration, la paroi de fond 46 comprend plusieurs panneaux 60, un entre chaque couple de poutres longitudinales 52.1 à 52.8.

Selon une autre configuration, la paroi de fond 46 comprend un unique panneau qui s'étend du premier bord latéral 50.1 jusqu'au deuxième bord latéral 50.2.

Bien entendu, l'invention n'est pas limitée à ces configurations pour les panneaux.

Selon une configuration visible sur les figures 7, 10 et 11, à l'état repos et en l'absence d'une différence de pression entre les première et deuxième zones Z1 et Z2, au moins un des panneaux 60, 60', 60" présente un rayon de courbure dans un plan transversal, sensiblement constant selon la direction longitudinale. Le fait que le panneau soit courbe dans un plan transversal permet d'augmenter son moment d'inertie par rapport à un panneau plan, ce qui contribue à accroître sa résistance à la flexion dans un plan longitudinal vertical. Ainsi, les contraintes de flexion appliquées aux poutres longitudinales 52.1 à 52.8 sont réduites. Selon une autre caractéristique, le rayon de courbure du panneau 60', 60" est orienté de manière à ce que le panneau 60', 60" soit courbé en direction de la deuxième zone Z2, en sens opposé par rapport aux efforts exercés sur la paroi de fond 46 en raison de la différence de pression entre les première et deuxième zones Z1, Z2. Selon un agencement, les premier et deuxième bords longitudinaux 60.1, 60.2 du panneau 60', 60" sont positionnés dans un même plan horizontal et au moins une partie du panneau 60', 60" est décalée vers la deuxième zone Z2 par rapport aux premier et deuxième bords longitudinaux 60.1, 60.2 du panneau 60', 60". Cet agencement permet d'obtenir une répartition homogène des efforts en direction des premier et deuxième bords longitudinaux 60.1, 60.2. En raison de l'orientation de la courbure, les efforts appliqués sur le panneau 60', 60", en raison de la différence de pression entre les première et deuxième zones Z1, Z2, induisent des contraintes sur les poutres longitudinales 52.1 à 52.8 comprenant une composante horizontale (et non uniquement une composante verticale comme pour l'art antérieur) au niveau des premier et deuxième bords longitudinaux 60.1, 60.2 ce qui contribue à réduire les contraintes verticales appliquées sur les poutres longitudinales 52.1 à 52.8.

Les panneaux 60, 60', 60" sont reliés aux première et deuxième ailes 58.1, 58.2 des poutres longitudinales 52.1 à 52.8 par au moins une liaison 62. A titre d'exemple, cette liaison 62 comprend une pluralité de rivets, de boulons ou autres répartis selon la direction longitudinale. En variante, la liaison 62 est obtenue par collage, thermosoudage ou toute autre technique analogue.

Selon une configuration visible sur la figure 13, au moins un bord parmi les premier et deuxième bords longitudinaux 60.1, 60.2 du panneau 60, 60', 60" est plaqué contre la face supérieure F' de la première ou deuxième aile 58.1, 58.2 d'une des poutres longitudinales 58.1 à 52.8. Cette configuration contribue à moins solliciter la liaison 62.

Selon une configuration visible sur les figures 7, 10 et 11, les premier et deuxième panneaux latéraux 60, 60' sont courbes et le panneau central 60 est plan. Comme illustré sur la figure 10, selon cette configuration, les semelles 58 des premières et deuxièmes poutres longitudinales d'extrémité et centrales 52.1, 52.4, 52.5, 52.8 sont sensiblement coplanaires et positionnées dans un premier plan horizontal. Les semelles 58 des premières et deuxièmes poutres longitudinales intermédiaires 52.2, 52.3, 52.6, 52.7 sont sensiblement coplanaires et positionnées dans un deuxième plan, sensiblement parallèle au premier plan et décalé vers la deuxième zone Z2 par rapport au premier plan.

Comme illustré sur la figure 15, la deuxième aile 58.2 de la première poutre longitudinale d'extrémité 52.1 est inclinée de sorte que son extrémité libre soit décalée vers la deuxième zone Z2. En complément, le premier bord longitudinal 60.1 du premier panneau latéral 60' est plaqué et fixé contre la face supérieure F' de la deuxième aile 58.2. De manière symétrique, la première aile 58.1 de la deuxième poutre longitudinale d'extrémité 52.8 est inclinée de sorte que son extrémité libre soit décalée vers la deuxième zone Z2. En complément, le deuxième bord longitudinal 60.2 du deuxième panneau latéral 60" est plaqué et fixé contra la face supérieure F' de la première ailes 58.1.

Comme illustré sur la figure 14, les première et deuxième ailes 58.1, 58.2 de la semelle 58 de la première poutre longitudinale intermédiaire 52.2 sont inclinées pour épouser le profil courbe du premier panneau latéral 60' qui est plaqué et fixé contre les faces inférieures F des première et deuxième ailes 58.1, 58.2. Pour cette première poutre longitudinale intermédiaire 52.2, l'extrémité libre de la deuxième aile 58.2 est décalée vers la deuxième zone Z2 par rapport à l'extrémité libre de la première aile 58.1.

Les première et deuxième ailes 58.1, 58.2 de la deuxième poutre longitudinale intermédiaire 52.3 sont également inclinées, l'extrémité libre de la deuxième aile 58.2 étant décalée vers la première zone Z1 par rapport à l'extrémité libre de la première aile 58.1.

Comme illustré sur la figure 15, la première aile 58.1 de la première poutre longitudinale centrale 52.4 est inclinée de sorte que son extrémité libre soit décalée vers la deuxième zone Z2. En complément, le deuxième bord longitudinal 60.2 du premier panneau latéral 60' est plaqué et fixé contre la face inférieure F de la première aile 58.1. La deuxième aile 58.2 de la première poutre longitudinale centrale 52.4 est sensiblement horizontale. En complément, le premier bord longitudinal 60.1 du panneau central 60 est plaqué et fixé contre la face inférieure F de la deuxième aile 58.2.

Les autres zones de jonction entre les panneaux 60, 60" et les poutres longitudinales 52.5 à 52.8 ne sont pas décrites car elles sont symétriques à celles précédemment décrites par rapport au plan médian vertical PMV.

Selon une autre configuration visible sur la figure 12, les panneaux latéraux 60', 60" ne sont pas nécessairement courbes.

Ainsi, chacun des premier et deuxième panneau latéraux 60', 60" comprend une partie centrale 64.1 plane sensiblement horizontale ainsi que des première et deuxième parties latérales 64.2, 64.3 planes et inclinées de sorte que la partie centrale 64.1 soit décalée vers la deuxième zone Z2 par rapport aux premier et deuxième bords longitudinaux 60.1, 60.2. Quel que soit le mode de réalisation, la paroi de fond 46 comprend au moins un panneau 60, 60', 60" qui présente un profil sensiblement constant selon la direction longitudinale et qui, au moins en l'absence d'une différence de pression entre les première et deuxième zones Z1 et Z2, comprend au moins une partie centrale décalée vers la deuxième zone Z2 par rapport à ses premier et deuxième bords longitudinaux 60.1, 60.2 reliés chacun à une poutre longitudinale 52.1 à 52.8. Ainsi, les efforts appliqués sur le panneau 60, 60', 60", en raison de la différence de pression entre les première et deuxième zones Z1, Z2, vont tendre à écarter les bords longitudinaux 60.1, 60.2, ce qui va induire des contraintes sur les poutres longitudinales 52.1 à 52.8 comprenant une composante horizontale (et non uniquement une composante verticale comme pour l'art antérieur) au niveau des premier et deuxième bords longitudinaux 60.1, 60.2 ainsi que contribuer à réduire les contraintes verticales appliquées sur les poutres longitudinales 52.1 à 52.8.

Pour obtenir une reprise des efforts symétriques, les premier et deuxième bords longitudinaux 60.1, 60.2 sont sensiblement positionnés dans un même plan horizontal.

Comme illustré sur la figure 7, au moins un panneau 60, 60', 60" comprend des nervures transversales 66 rapportées sur sa face orientée vers la première zone Z1. Ces nervures transversales 66 sont orientées perpendiculairement à la direction longitudinale et régulièrement réparties sur la longueur (direction parallèle à la direction longitudinale) du panneau 60, 60', 60". Selon une configuration, tous les panneaux 60, 60', 60" sont renforcés et comprennent des nervures transversales 66.

Selon un mode de réalisation visible sur la figure 13, la première aile 58.1 d'au moins une poutre longitudinale parmi les première et deuxième poutres longitudinales d'extrémité 52.1, 52.8 est horizontale et supporte un panneau 68 sensiblement horizontal.

Contrairement à l'art antérieur, dans un plan transversal, les première et deuxième ailes 58.1, 58.2 concourent au niveau de l'âme 56 en un même point P pour éviter l'apparition d'un moment.

Cet agencement peut s'appliquer à toutes les poutres longitudinales 52.1 à 52.8.

Selon un mode de réalisation visible sur les figures 7 et 9, la case de train d'atterrissage principale 40 comprend au moins une jambe de force 70, 72 reliant la paroi transversale arrière ou avant 42, 44 et la paroi de fond 46, positionnée approximativement dans le plan médian vertical PMV, distante du bord avant ou arrière 46.1, 46.2. Selon une configuration, la case de train d'atterrissage principale 40 comprend une jambe de force 70 arrière reliant la paroi transversale arrière 42 et la paroi de fond 46. Selon une autre configuration, la case de train d'atterrissage principale 40 comprend une jambe de force 70 arrière reliant la paroi transversale arrière 42 et la paroi de fond 46 ainsi qu'une jambe de force 72 avant reliant la paroi transversale avant 44 et la paroi de fond 46, les jambes de force 70, 72 arrière et avant étant positionnées approximativement dans le plan médian vertical PMV.

Chaque jambe de force 70, 72 permet de limiter la déformation de la paroi de fond 46 en cas de différences de pression importantes de part et d'autre de la paroi de fond 46.

Chaque jambe de force 70, 72 arrière ou avant comprend une première extrémité 70.1, 72.1 reliée à un premier point d'ancrage 74, 76 prévu sur la paroi transversale arrière ou avant 42, 44 ainsi qu'une deuxième extrémité 70.2, 72.2 reliée à un deuxième point d'ancrage 78, 80 prévu sur la paroi de fond 46.

Le premier point d'ancrage 74 de la jambe de force 70 arrière est positionné à proximité du côté inférieur 42.2 de la paroi transversale arrière 42. Le premier point d'ancrage 76 de la jambe de force 72 avant est positionné à proximité du côté inférieur 44.2 de la paroi transversale avant 44.

Pour chaque jambe de force 70, 72 arrière ou avant, le deuxième point d'ancrage 78, 80 est séparé du bord arrière ou avant 46.1, 46.2 de la paroi de fond 46 d'une distance L/4 correspondant à environ un quart de la longueur L de la base de fond 46 ou un peu moins du quart de la longueur L. Cette position des deuxièmes points d'ancrage 78, 80 permet d'optimiser le renforcement de la paroi de fond 46.

Selon un mode de réalisation, chaque deuxième point d'ancrage 78, 80 est relié aux poutres longitudinales centrales 52.4, 52.5 de la paroi de fond 46 de manière à assurer un meilleur transfert de charge entre la jambe de force 70, 72 arrière ou avant et la paroi de fond 46.

Bien entendu, l'invention n'est pas limitée à la case de train d'atterrissage principale et peut s'appliquer à toutes les cases de train d'atterrissage.

## Revendications

1. Case de train d'atterrissage comprenant une paroi de fond (46) présentant un bord arrière (46.1), un bord avant (46.2) parallèle au bord arrière (46.1) et perpendiculaire à un plan médian vertical (PMV) ainsi que des premier et deuxième bords latéraux (50.1, 50.2) parallèles au plan médian vertical (PMV), la paroi de fond (46) comportant des poutres longitudinales (52.1 à 52.8) reliant les bords arrière et avant (46.1, 46.2), parallèles au plan médian vertical (PMV), ainsi qu'au moins un panneau (60, 60', 60") formant une barrière étanche entre des première et deuxième zones (Z1, Z2) disposées de part et d'autre du panneau (60, 60', 60"), ledit panneau (60, 60', 60") présentant des premier et deuxième bords longitudinaux (60.1, 60.2) reliés chacun à une des poutres longitudinales (52.1 à 52.8), la deuxième zone (Z2) étant adaptée pour subir une pression supérieure à celle de la première zone (Z1) ; **caractérisée en ce que** le panneau (60, 60', 60") présente un profil sensiblement constant selon la direction longitudinale et comprend, au moins en l'absence d'une différence de pression entre les première et deuxième zones (Z1 et Z2), au moins une partie centrale décalée vers la deuxième zone (Z2) par rapport à ses premier et deuxième bords longitudinaux (60.1, 60.2) de sorte que des efforts appliqués sur le panneau (60, 60', 60"), en raison d'une différence de pression entre les première et deuxième zones (Z1, Z2), induisent des contraintes sur les poutres longitudinales (52.1 à 52.8) comprenant une composante horizontale au niveau des premier et deuxième bords longitudinaux (60.1, 60.2).

2. Case de train d'atterrissage selon la revendication précédente, **caractérisée en ce que** les premier et deuxième bords longitudinaux (60.1, 60.2) sont positionnés dans un même plan horizontal.

3. Case de train d'atterrissage selon l'une des revendications précédentes, **caractérisée en ce que** le panneau (60', 60") présente un profil courbe dans un plan transversal.

4. Case de train d'atterrissage selon l'une des revendications 1 à 2, **caractérisée en ce que** le panneau (60', 60") comprend une partie centrale (64.1) plane sensiblement horizontale ainsi que des première et deuxième parties latérales (64.2, 64.3) planes et inclinées de sorte que la partie centrale (64.1) soit décalée vers la deuxième zone (Z2) par rapport aux premier et deuxième bords longitudinaux (60.1, 60.2).

5. Case de train d'atterrissage selon l'une des revendications précédentes, **caractérisée en ce qu'**au moins une poutre longitudinale comprend une âme (56), des première et deuxième ailes (58.1, 58.2), disposées de part et d'autre de l'âme (56), supportant chacune un panneau (68, 60, 60', 60"), les première et deuxième ailes (58.1, 58.2) étant concourantes au niveau de l'âme (56).

6. Case de train d'atterrissage selon la revendication précédente, **caractérisée en ce que** la paroi de fond (46) comprend une première poutre longitudinale d'extrémité (52.1) positionnée à proximité ou au niveau du premier bord latéral (50.1), une deuxième poutre longitudinale d'extrémité (52.8) positionnée à proximité ou au niveau du deuxième bord latéral (50.2), des première et deuxième poutres longitudinales centrales (52.4, 52.5) disposées de part et d'autre du plan médian vertical (PMV), un premier couple de première et deuxième poutres longitudinales intermédiaires (52.2, 52.3) intercalées entre les premières poutres longitudinales d'extrémité et centrale (52.1, 52.4) ainsi qu'un deuxième couple de première et deuxième poutres longitudinales intermédiaires (52.6, 52.7) intercalées entre les deuxièmes poutres longitudinales d'extrémité et centrale (52.5, 52.8).

7. Case de train d'atterrissage selon la revendication précédente, **caractérisée en ce que** la paroi de fond (46) comprend un panneau central (60) reliant les première et deuxième poutres longitudinales centrales (52.4, 52.5), un premier panneau latéral (60') reliant la première poutre longitudinale d'extrémité (52.1) et la première poutre longitudinale centrale (52.4) ainsi qu'un deuxième panneau latéral (60") reliant la deuxième poutre longitudinale centrale (52.5) et la deuxième poutre longitudinale d'extrémité (52.8), chacune des premier et deuxième panneaux latéraux (60', 60") présentant une partie centrale décalée vers la deuxième zone (Z2) par rapport à ses premier et deuxième bords longitudinaux (60.1, 60.2) positionnés dans un même plan horizontal.

8. Case de train d'atterrissage selon la revendication précédente, **caractérisée en ce qu'**une des première et deuxième ailes (58.1, 58.2) de la première ou deuxième poutre longitudinale d'extrémité (52.1, 52.8) est inclinée et présente une extrémité libre décalée vers la deuxième zone (Z2) ainsi qu'une face orientée vers la deuxième zone (Z2) contre laquelle est plaqué et fixé le premier ou deuxième bord longitudinal (60.1, 60.2) du premier ou deuxième panneau latéral (60', 60").

9. Case de train d'atterrissage selon l'une des revendications 7 à 8, **caractérisée en ce que** la première aile (58.1) de la première ou deuxième poutre longitudinale centrale (52.4, 52.5) est inclinée et présente une extrémité libre décalée vers la deuxième zone (Z2) ainsi qu'une face orientée vers la première zone (Z1) contre laquelle est plaqué et fixé le premier ou deuxième bord longitudinal (60.1, 60.2) du premier ou deuxième panneau latéral (60', 60") et **en ce que** la deuxième aile (58.2) de la première ou deuxième poutre longitudinale centrale (52.4, 52.5) est sensiblement horizontale et présente une face orientée vers la première zone (Z1) contre laquelle est plaqué et fixé le premier ou deuxième bord longitudinal (60.1, 60.2) du panneau central (60).

10. Case de train d'atterrissage selon l'une des revendications 7 à 9, **caractérisée en ce que** les première et deuxième ailes (58.1, 58.2) de chacune des premières et deuxième poutres longitudinales intermédiaires (52.2, 52.3, 52.6, 52.7) sont inclinées, le premier ou deuxième panneau latéral (60', 60") étant plaqué et fixé contre les première et deuxième ailes (58.1, 58.2).

11. Case de train d'atterrissage selon l'une des revendications précédentes, **caractérisée en ce qu'**au moins un panneau (60, 60', 60") comprend des nervures transversales (66) rapportées sur une face du panneau (60, 60', 60") orientée vers la première zone (Z1).

12. Aéronef comprenant une case de train d'atterrissage selon l'une des revendications précédentes.

## Patentansprüche

1. Fahrwerksschacht mit einer Bodenwand (46), die einen hinteren Rand (46.1), einen zum hinteren Rand (46.1) parallelen und zu einer vertikalen Mittelebene (PMV) senkrechten vorderen Rand (46.2), sowie einen zur vertikalen Mittelebene (PMV) parallelen ersten und zweiten seitlichen Rand (50.1, 50.2) aufweist, wobei die Bodenwand (46) Längsträger (52.1 bis 52.8) aufweist, die den hinteren und vorderen Rand (46.1, 46.2) verbinden und parallel zur vertikalen Mittelebene (PMV) verlaufen, sowie wenigstens eine Platte (60, 60', 60"), die eine dichte Barriere zwischen einer ersten und einer zweiten Zone (Z1, Z2) bildet, die auf beiden Seiten der Platte (60, 60', 60") angeordnet sind, wobei die Platte (60, 60', 60") einen ersten und einen zweiten Längsrand (60.1, 60.2) aufweist, die jeweils mit einer der Längsträger (52.1 bis 52.8) verbunden sind, wobei die zweite Zone (Z2) dazu ausgelegt ist, einem höheren Druck als die erste Zone (Z1) ausgesetzt zu sein, **dadurch gekennzeichnet, dass** die Platte (60, 60', 60") in Längsrichtung ein im Wesentlichen konstantes Profil aufweist und zumindest in Abwesenheit eines Druckunterschieds zwischen der ersten und der zweiten Zone (Z1 und Z2) wenigstens einen mittleren Abschnitt umfasst, der in Richtung der zweiten Zone (Z2) in Bezug auf seinen ersten und zweiten Längsrand (60.1, 60.2) versetzt ist, so dass Kräfte, die aufgrund eines Druckunterschieds zwischen der ersten und der zweiten Zone (Z1, Z2) auf die Platte (60, 60', 60") ausgeübt werden, auf den Längsträgern (52.1 bis 52.8) Belastungen hervorrufen, die eine horizontale Komponente an dem ersten und dem zweiten Längsrand (60.1, 60.2) aufweisen.

2. Fahrwerksschacht nach dem vorhergehenden Anspruch, **dadurch gekennzeichnet, dass** der erste und zweite Längsrand (60.1, 60.2) in einer gleichen horizontalen Ebene angeordnet sind.

3. Fahrwerksschacht nach einem der vorhergehenden Ansprüche, **dadurch gekennzeichnet, dass** die Platte (60', 60") in einer Querebene ein gekrümmtes Profil aufweist.

4. Fahrwerksschacht nach einem der Ansprüche 1 bis 2, **dadurch gekennzeichnet, dass** die Platte (60', 60") einen im Wesentlichen horizontalen ebenen Mittelteil (64.1) sowie einen ersten und einen zweiten Seitenteil (64.2, 64.3) aufweist, die eben und geneigt sind, so dass der Mittelteil (64.1) in Bezug auf den ersten und zweiten Längsrand (60.1, 60.2) in Richtung der zweiten Zone (Z2) versetzt ist.

5. Fahrwerksschacht nach einem der vorhergehenden Ansprüche, **dadurch gekennzeichnet, dass** wenigstens ein Längsträger einen Steg (56) sowie einen ersten und zweiten Flügel (58.1, 58.2) aufweist, die beidseits des Stegs (56) angeordnet sind und jeweils eine Platte (68, 60, 60', 60") tragen, wobei der erste und der zweite Flügel (58.1, 58.2) im Bereich des Stegs (56) zusammenlaufen.

6. Fahrwerksschacht nach dem vorhergehenden Anspruch, **dadurch gekennzeichnet, dass** die Bodenwand (46) einen ersten Endlängsträger (52.1), der in der Nähe oder im Bereich des ersten seitlichen Rands (50.1) angeordnet ist, einen zweiten Endlängsträger (52.8), der in der Nähe oder auf im Bereich des zweiten seitlichen Rands (50.2) angeordnet ist, einen ersten und zweiten Mittellängsträger (52.4, 52.5), die beidseits der vertikalen Mittelebene (PMV) angeordnet sind, ein erstes Paar erster und zweiter Zwischenlängsträger (52.2, 52.3), die zwischen dem ersten End- und Mittellängsträger (52.1, 52.4) eingefügt sind, sowie ein zweites Paar erster und zweiter Zwischenlängsträger (52.6, 52.7) aufweist, die zwischen dem zweiten End- und Mittellängsträger (52.5, 52.8) eingefügt sind.

7. Fahrwerksschacht nach dem vorhergehenden Anspruch, **dadurch gekennzeichnet, dass** die Bodenwand (46) eine Mittelplatte (60), die den ersten und zweiten Mittellängsträger (52.4, 52.5) verbindet, eine erste Seitenplatte (60'), die den ersten Endlängsträger (52.1) und den ersten Mittellängsträger (52.4) verbindet, sowie eine zweite Seitenplatte (60") aufweist, die den zweiten Mittellängsträger (52.5) und den zweiten Endlängsträger (52.8) verbindet, wobei jede der ersten und zweiten Seitenplatten (60', 60") einen Mittelteil aufweist, der in Bezug auf seine ersten und zweiten Längsränder (60.1, 60.2), die in einer gleichen horizontalen Ebene angeordnet sind, in Richtung der zweiten Zone (Z2) versetzt ist.

8. Fahrwerksschacht nach dem vorhergehenden Anspruch, **dadurch gekennzeichnet, dass** einer der ersten und zweiten Flügel (58.1, 58.2) des ersten oder zweiten Endlängsträgers (52.1, 52.8) geneigt ist und ein zur zweiten Zone (Z2) versetztes freies Ende sowie eine der zweiten Zone (Z2) zugewandte Seite aufweist, an der der erste oder zweite Längsrand (60.1, 60.2) der ersten oder zweiten Seitenplatte (60', 60") angesetzt und befestigt ist.

9. Fahrwerksschacht nach einem der Ansprüche 7 bis 8, **dadurch gekennzeichnet, dass** der erste Flügel (58.1) des ersten oder zweiten Mittellängsträgers (52.4, 52.5) geneigt ist und ein zur zweiten Zone (Z2) hin versetztes freies Ende sowie eine der ersten Zone (Z1) zugewandte Seite aufweist, an der der erste oder zweite Längsrand (60.1, 60.2) der ersten oder zweiten Seitenplatte (60', 60") angesetzt und befestigt ist, und dass der zweite Flügel (58.2) des ersten oder zweiten Mittelängsträgers (52.4, 52.5) im Wesentlichen horizontal ist und eine der ersten Zone (Z1) zugewandte Seite aufweist, an der der erste oder zweite Längsrand (60.1, 60.2) der Mittelplatte (60) angesetzt und befestigt ist.

10. Fahrwerksschacht nach einem der Ansprüche 7 bis 9, **dadurch gekennzeichnet, dass** der erste und zweite Flügel (58.1, 58.2) der ersten und zweiten Zwischenlängsträger (52.2, 52.3, 52.6, 52.7) jeweils geneigt ist, wobei die erste oder zweite Seitenplatte (60', 60") an den ersten und zweiten Flügel (58.1, 58.2) angesetzt und daran befestigt ist.

11. Fahrwerksschacht nach einem der vorhergehenden Ansprüche, **dadurch gekennzeichnet, dass** wenigstens eine Platte (60, 60', 60") Querrippen (66) umfasst, die an einer Seite der Platte (60, 60', 60") angebracht sind, die dem ersten Bereich (Z1) zugewandt ist.

12. Luftfahrzeug mit einem Fahrwerksschacht nach einem der vorhergehenden Ansprüche.

## Claims

1. Landing gear bay comprising a bottom wall (46) having a rear edge (46.1), a front edge (46.2) parallel to the rear edge (46.1) and at right angles to a vertical median plane (PMV) and first and second lateral edges (50.1, 50.2) parallel to the vertical median plane (PMV), the bottom wall (46) comprising longitudinal beams (52.1 to 52.8) linking the rear and front edges (46.1, 46.2), parallel to the vertical medial plane (PMV), and at least one panel (60, 60, 60") forming an airtight barrier between first and second zones (Z1, Z2) disposed on either side of the panel (60, 60', 60"), said panel (60, 60', 60") having first and second longitudinal edges (60.1, 60.2) each linked to one of the longitudinal beams (52.1 to 52.8), the second zone (Z2) being able to sustain a pressure greater than that of the first zone (Z1); **characterized in that** the panel (60, 60', 60") has a profile that is substantially constant in the longitudinal direction and comprises, at least in the absence of a pressure difference between the first and second zones (Z1 and Z2), at least one central part offset toward the second zone (Z2) with respect to its first and second longitudinal edges (60.1, 60.2) such that the loads applied to the panel (60,' 60', 60"), because of the pressure difference between the first and second zones (Z1, Z2), induce stresses on the longitudinal beams (52.1 to 52.8) comprising a horizontal component at the first and second longitudinal edges (60.1, 60.2).

2. Landing gear bay as claimed in the preceding claim, **characterized in that** the first and second longitudinal edges (60.1, 60.2) are positioned in a same horizontal plane.

3. Landing gear bay as claimed in one of the preceding claims, **characterized in that** the panel (60', 60") has a curved profile in a transverse plane.

4. Landing gear bay as claimed in one of claims 1 and 2, **characterized in that** the panel (60', 60") comprises a substantially horizontal flat central part (64.1) and first and second flat and inclined lateral parts (64.2, 64.3) such that the central part (64.1) is offset toward the second zone (Z2) with respect to the first and second longitudinal edges (60.1, 60.2).

5. Landing gear bay as claimed in one of the preceding claims, **characterized in that** at least one longitudinal beam comprises a web (56), first and second flange portions (58.1, 58.2), disposed on either side of the web (56), each supporting a panel (68, 60, 60', 60"), the first and second flange portions (58.1, 58.2) converging at the web (56).

6. Landing gear bay as claimed in the preceding claim, **characterized in that** the bottom wall (46) comprises a first end longitudinal beam (52.1) positioned in proximity to or at the first lateral edge (50.1), a second end longitudinal beam (52.8) positioned in proximity to or at the second lateral edge (50.2), first and second central longitudinal beams (52.4, 52.5) disposed on either side of the vertical medial plane (PMV), a first pair of first and second intermediate longitudinal beams (52.2, 52.3) inserted between the first end and central longitudinal beams (52.1, 52.4) and a second pair of first and second intermediate longitudinal beams (52.6, 52.7) inserted between the second end and central longitudinal beams (52.5, 52.8).

7. Landing gear bay as claimed in the preceding claim, **characterized in that** the bottom wall (46) comprises a central panel (60) linking the first and second central longitudinal beams (52.4, 52.5), a first lateral panel (60') linking the first end longitudinal beam (52.1) and the first central longitudinal beam (52.4) and a second lateral panel (60") linking the second central longitudinal beam (52.5) and the second end longitudinal beam (52.8), each of the first and second lateral panels (60', 60") having a central part offset toward the second zone (Z2) with respect to its first and second longitudinal edges (60.1, 60.2) positioned in a same horizontal plane.

8. Landing gear bay as claimed in the preceding claim, **characterized in that** one of the first and second flange portions (58.1, 58.2) of the first or second end longitudinal beam (52.1, 52.8) is inclined and has a free end offset toward the second zone (Z2) and a face oriented toward the second zone (Z2) against which the first or second longitudinal edge (60.1, 60.2) of the first or second lateral panel (60', 60") is pressed and fixed.

9. Landing gear bay as claimed in one of claims 7 and 8, **characterized in that** the first flange portion (58.1) of the first or second central longitudinal beam (52.4, 52.5) is inclined and has a free end offset toward the second zone (Z2) and a face oriented toward the first zone (Z1) against which the first or second longitudinal edge (60.1, 60.2) of the first or second lateral panel (60', 60") is pressed and fixed, and **in that** the second flange portion (58.2) of the first or second central longitudinal beam (52.4, 52.5) is substantially horizontal and has a face oriented toward the first zone (Z1) against which the first or second longitudinal edge (60.1, 60.2) of the central panel (60) is pressed and fixed.

10. Landing gear bay as claimed in one of claims 7 to 9, **characterized in that** the first and second flange portions (58.1, 58.2) of each of the first and second intermediate longitudinal beams (52.2, 52.3, 52.6, 52.7) are inclined, the first or second lateral panel (60', 60") being pressed and fixed against the first and second flange portions (58.1, 58.2).

11. Landing gear bay as claimed in one of the preceding claims, **characterized in that** at least one panel (60, 60', 60") comprises transverse ribs (66) added onto a face of the panel (60, 60', 60") oriented toward the first zone (Z1).

12. Aircraft comprising a landing gear bay as claimed in one of the preceding claims.
